Europäisches Patentamt

European Patent Office

Office européen des brevets

(11) Publication number: **0 126 190**
A1

# EUROPEAN PATENT APPLICATION

(21) Application number: **83302762.6**

(51) Int. Cl.³: **A 01 K 27/00**

(22) Date of filing: **16.05.83**

(43) Date of publication of application: **28.11.84**
**Bulletin 84/48**

(84) Designated Contracting States: **AT BE CH DE FR IT LI NL SE**

(71) Applicant: **Salmon, Donald Joseph, Exhall House Blackberry Lane, Ash Green Near Coventry West Midlands (GB)**

(72) Inventor: **Salmon, Donald Joseph, Exhall House Blackberry Lane, Ash Green Near Coventry West Midlands (GB)**

(74) Representative: **Wilson, Thomas Arthur Fletcher et al, 10, Grosvenor House Grosvenor Road, Coventry West Midlands, CV1 3FZ (GB)**

(54) Dog lead or collar.

(57) A lead or collar primarily for use on dogs or on other animals is of flexible strap form (1) having a buckle ring or similar member (2) secured to one end and through which a portion of the strap (1) can be freely passed to provide a loop or collar (10) for putting about the neck of a dog or other animal. The ring (2) carries a freely rotatable transverse roller (20) for anti-friction rolling contact with the strap (1) for enabling the loop or collar (10) to tighten about the dog's neck when the latter pulls and also ensuring immediate slackening of such restriction when the dog stops pulling.

In a development a stop device or clip (4) is adjustable along the strap (1) to limit the extent to which the loop or collar (10) opens when slack. If desired a non-rotatable transverse member similar to the roller (20) may have sliding contact with the strap (1).

The object of this invention is to provide an improved lead or collar primarily for use on dogs or on other animals requiring similar control. A particular object of the invention is to provide a lead or collar capable of having a restricting action about the neck of the dog or other animal in order to discourage the latter from pulling when on a lead and so providing a better alternative in this respect to the well-known "choke chain" arrangement. This and other practical advantages of the invention will be apparent from the following disclosure.

According to this invention a lead or collar primarily for use on dogs or on other animals is characterised by the lead or collar being of flexible strap form and having a buckle ring or rim or like member secured to one end of the strap and through which the strap is or can be freely passed to provide a loop or collar portion for putting about the neck of a dog or other animal, the ring or like member having a transverse member of a peripheral curvature corresponding to a diameter several times the thickness of the strap for anti-friction contact with the strap in order to permit easy non-jamming movement of the strap through the ring or the like and without sharp bending of the strap about the transverse member for enabling the lead or collar to tighten about the dog's neck when the latter pulls and also ensuring immediate slackening of such restriction when the dog stops pulling.

Practical examples of the invention are shown in the accompanying drawings in which:-

FIGURE 1                    is a perspective view of a
                            lead,

FIGURE 2                    is a similar view of a collar,

FIGURES 3 and 4             are views similar to FIGURES 1
                            and 2 but showing a
                            development, and,

FIGURE 5                    is a detail view showing a
                            modification.

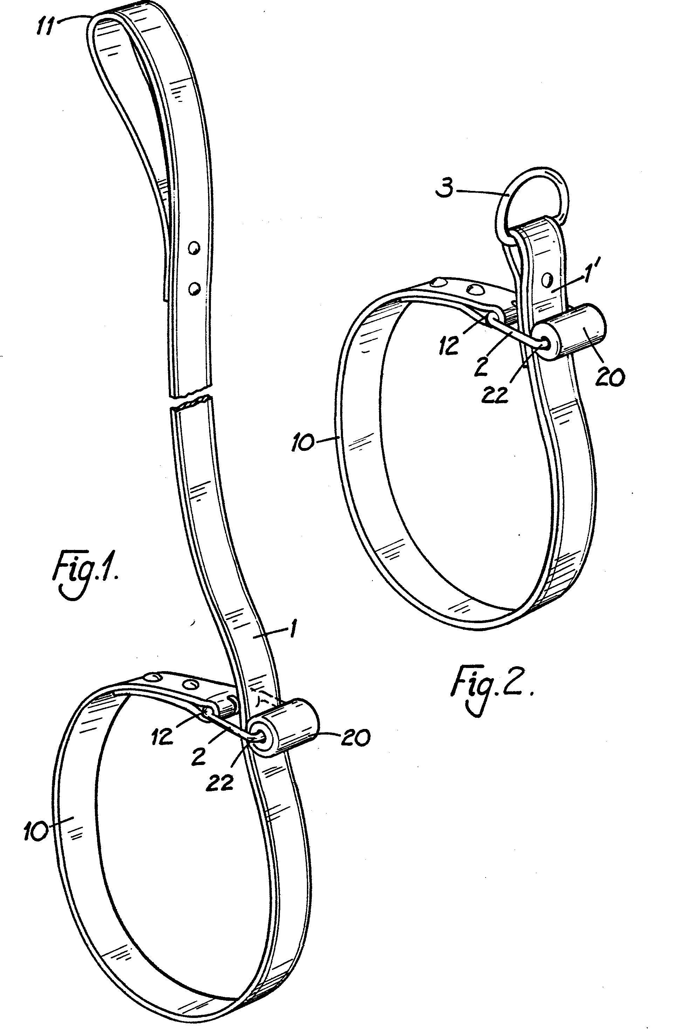

Referring to FIGURE 1 the lead 1 is of strap form, e.g. of leather or other suitable flexible and durable material such as nylon or other plastic material and has pivotally secured at 12 to one end a buckle ring or rim or similar member 2 through which a major part of the lead strap 1 can be freely passed to leave a loop portion 10 for putting about the neck of a dog, i.e. by passing the loop 10 (or collar so provided) over the dog's head.

As will be appreciated the loop or collar portion 10 can be securely closed about the dog's neck by pulling the lead strap 1 through the ring 2 and in the event of the dog pulling on the lead, the loop or collar portion 10 tightens about the dog's neck with a restricting or choking action which discourages the dog from pulling.

0126190

Particularly in accordance with this invention the ring 2 is provided with a freely rotatable transverse roller 20 for anti-friction rolling contact with the back of the strap 1 which not only enables the above tightening action to take place, but more importantly ensures that slackening of the loop or collar portion 10 about the dog's neck immediately occurs when the dog stops pulling so that harm or injury to the dog is avoided or minimised. Thus the likelihood of the loop or collar portion 10 jamming in the tightened condition about the dog's neck is virtually avoided. Furthermore, putting the lead on a dog or taking it off is considerably facilitated by the easy action of the roller contact at 20 with the strap 1.

The arrangement can be preferably such that the hand held end 11 of the lead 1 can be readily passed through the ring 2 between the roller 20 and the pivotal connection 12 of the ring 2 to the strap 1.

In the case of a collar (FIGURE 2) the construction, arrangement and action of the ring 2 and roller 20 in relation to the strap 1' is the same as that already described except that the other end of the short strap 1' is provided with a ring 3 for receiving a dog lead clip releasably attached to it.

The ring 3 is of a width such that it cannot pass back through the ring 2 and the length of the strap 1' is also such that when the collar portion 10 is enlarged to substantially its fullest extent it can be passed over the dog's head for putting on or removal. In addition the length of the strap 1' is also such that when the collar is slack it can freely hang about the dog's neck with little risk of it becoming accidentally removed especially when not attached to a lead.

In either case the roller 20 is rotatably carried by the ring 2 in any suitable manner such as about a cross member or pin or inwardly bent end portions 22 of the latter. The end peripheral edges of the roller 20 may be rounded and/or the roller may be of barrel form. Whereas a single roller 20 as shown is usually sufficient, two or more end to end rollers may be employed for required anti-friction rolling contact with the exterior of the strap 1, 1'.

In the examples shown at least the periphery of the roller 20 may be of durable plastic material such as nylon and preferably has a smooth uninterrupted surface. Thus the whole roller 20 is preferably of nylon or similar material for anti-friction rolling contact about the end portions 22 of the ring 2.

The length and diameter of the roller 20 are such as to minimise wear of the strap 1 or 1' and also avoid sharp bending or flexing of the latter which might otherwise cause breakage and also jamming. In the examples shown the diameter of the roller 20 is several times the thickness (e.g. 1/8" - 4 mm.) of the strap 1 or 1' and is of the order of 3/8" to 1" (10 mm. to 25 mm.) but such dimension may be varied according to requirements. The diameter of the roller 20 is such that a non-jamming action is obtained even in thick or long fur about the dog's neck. The width of the strap 1 or 1', e.g. 1" (25 mm.) provides firm but distributed pressure as it tightens about the dog's neck so that a harmful cutting action is avoided in contrast to a choke chain which latter is also prone to jamming.

The strap 1 or 1' is also suitable for conveniently receiving a name plate or other marking and the entire lead or collar can be inexpensively produced using strong and durable leather or plastic strap which does not require to be perforated except where riveted together.

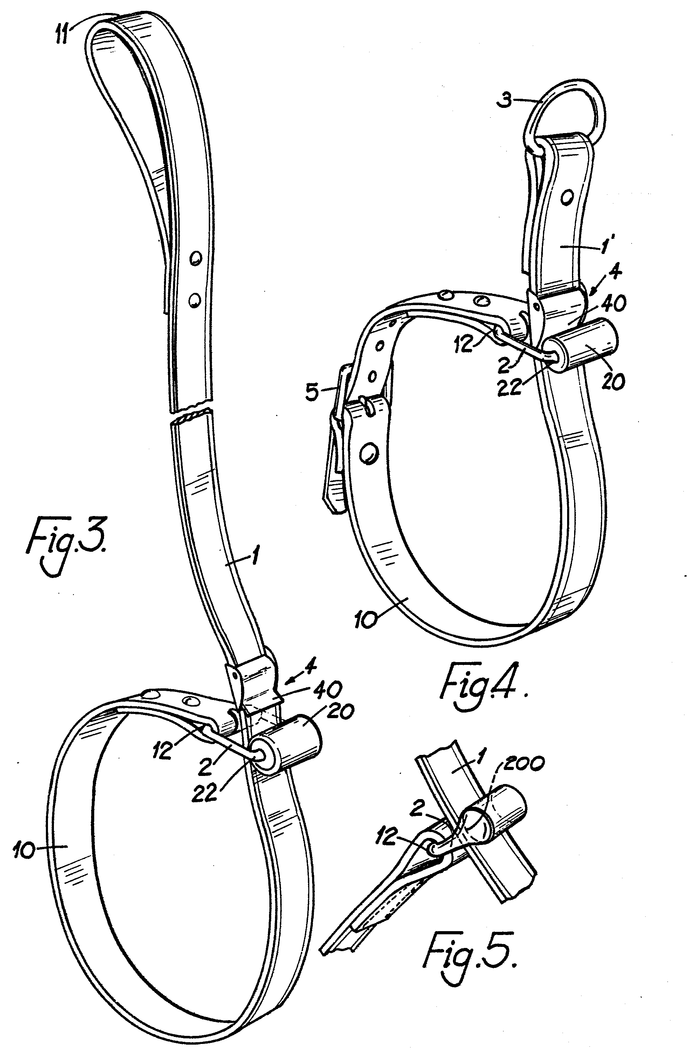

Referring to FIGURES 3 and 4 a development is shown in which a stop device 4 is provided on the lead strap 1 or 1' and adjustable along it to limit the extent to which the collar portion 10 opens when slack. This caters for variation in the size of dog's necks and enables the maximum opening to be set so that slipping of the collar 10 by the dog or the collar otherwise becoming removed when slack is avoided or minimised.

The stop device 4 is shown consisting of a snap action clip which releasably clamps onto the strap 1 or 1' at any desired position by appropriate operation of the fingerpiece 40.

In FIGURE 4 the collar is also shown provided with a buckle 5 for collar size adjustment in the normal manner.

Whereas the roller 20 provides very effective anti-friction rolling contact between the ring 2 and strap 1 or 1', if desired and as shown in FIGURE 5 a non-rotatable smoothly rounded transverse member or skid 200 may be provided having a similar radius or diameter of peripheral curvature to that of the roller 20, but for sliding contact with the strap 1, 1'.

The transverse member 200 is shown of similar form to the roller 20 but is fixed or integral with the ring 2 e.g. in a moulded construction in nylon or other suitable material.

The peripheral surface of the transverse member 200 may be faced with anti-friction material such as PTFE (polytetrafluoroethylene).

# CLAIMS.

1. A lead or collar primarily for use on dogs or on other animals is characterised by the lead or collar being of flexible strap form (1, 1') and having a buckle ring or rim or like member (2) secured to one end of the strap (1, 1') and through which the strap (1, 1') is or can be freely passed to provide a loop or collar portion (10) for putting about the neck of a dog or other animal, the ring or like member (2) having a transverse member (20, 200) of a peripheral curvature corresponding to a diameter several times the thickness of the strap (1, 1') for anti-friction contact with the strap in order to permit easy non-jamming movement of the strap (1, 1') through the ring (2) or the like and without sharp bending of the strap (1, 1') about the transverse member (20, 200) for enabling the lead or collar to tighten about the dog's neck when the latter pulls and also ensuring immediate slackening of such restriction when the dog stops pulling.

2. A lead or collar according to Claim 1 wherein the transverse member (20) is provided by at least one transverse roller (20) carried for free rotation by the ring or like member (2) for anti-friction rolling contact with the strap (1, 1').

3. A lead or collar according to Claim 1 or 2 wherein the transverse member (20, 200) or the or each roller (20) thereof has a smooth uninterrupted peripheral surface.

0126190

4.   A lead or collar according to Claim 1, 2 or 3 wherein the transverse member in the form of a roller (20) is freely rotatable about inturned ends (22) of the ring or like member (2).

5.   A lead or collar according to Claim 1 wherein the transverse member (200) is non-rotatable relative to the ring or like member (2) and has an anti-friction sliding contact with the strap (1, 1').

6.   A lead or collar according to any of the preceding claims, wherein at least the periphery of the transverse member (20, 200) or of the or each roller (20) thereof is of durable plastic material such as nylon.

7.   A lead or collar according to any of the preceding claims wherein the peripheral curvature of the transverse member (20, 200) or of the or each roller (20) thereof corresponds to a diameter of the order of 3/8" to 1" (10 mm. to 25 mm.).

8.   A lead or collar according to any of the preceding claims wherein the transverse member (20, 200) or the or each roller (20) thereof has rounded end peripheral edges and/or is of barrel form peripheral curvature.

9.   A lead or collar according to any of the preceding claims wherein the strap (1, 1') is provided with a stop device (4) adjustable along it in order to limit the extent to which the collar portion (10) opens when slack.

10. A lead or collar according to Claim 9 wherein the stop device (4) consists of a clip such as a snap action clip which releasable clamps onto the strap.

Fig.1.

Fig.2.

0126190

Fig.3.

Fig.4.

Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| E,X | GB-A-2 109 215 (D.J. SALMON) <br> * Whole document * | 1-10 | A 01 K 27/00 |
| Y,A | GB-A- 859 856 (E. NEWGASS) <br><br> * Page 1, line 22 - page 2, line 3; figures 1, 2 * | 1,3,5, 9 | |
| Y,A | US-A-1 924 596 (H.C. DAVIS) <br><br> * Page 1, lines 62-76; figure 5 * | 1,3,5, 6 | |
| A | CH-A- 177 878 (E. HESS) <br><br> * Whole document * | 1,3,5, 9 | |

TECHNICAL FIELDS SEARCHED (Int. Cl. 3)

A 01 K 27/00

The present search report has been drawn up for all claims

| Place of search <br> BERLIN | Date of completion of the search <br> 23-12-1983 | Examiner <br> BERGZOLL M C |
|---|---|---|